# EUROPÄISCHE PATENTSCHRIFT

(11) **EP 1 189 700 B1**
(45) Veröffentlichungstag und Bekanntmachung des Hinweises auf die Patenterteilung: **27.10.2004**
(21) Anmeldenummer: 00934935.8
(22) Anmeldetag: 04.05.2000
(51) Int. Cl.: B01J 47/02

(54) **BEHÄLTER**
CONTAINER
CONTENANT

(30) Priorität: 04.05.1999 DE 29907957 U
(43) Veröffentlichungstag der Anmeldung: 27.03.2002
(73) Patentinhaber: Schäfer Werke GmbH, D-57272 Neunkirchen (DE)
(72) Erfinder: REICHMANN, Hans, H., D-57299 Burbach (DE); SCHREPFER, Bernd, D-57567 Daaden (DE)
(74) Vertreter: Valentin, Ekkehard, Dipl.-Ing.
(86) Internationale Anmeldenummer: PCT/DE2000/001394
(87) Internationale Veröffentlichungsnummer: WO 2000/066264

(56) Entgegenhaltungen:
- WO-A-96/07462
- CA-A- 1 273 721
- DE-A- 1 945 659

## Beschreibung

Die Erfindung betrifft einen Behälter, umfassend einen zylindrischen Mantel, einen Behälterdeckel und einen Behälterboden sowie einen Stand- und Kopfring, mit einer Granulatfüllung zur chemischen und/oder physikalischen Behandlung von Flüssigkeiten im Durchfluss innerhalb des Behälters mit je einem Anschluß für Flüssigkeitseingang und -ausgang, wobei die Anschlüsse für mindestens Flüssigkeitseingang und Flüssigkeitsausgang in einem Anschlußteil einer außerdem ein von dem Anschlußteil bis zum Behälterboden reichendes Rohr mit unten ein Sammel/Verteilerstück aufweisenden Zentraleinheit angeordnet sind, die in einem Behälteranschluß im Behälterdeckel druckdicht montiert ist und die jeweiligen funktionalen Strömungswege für den Flüssigkeitseingang in den Bereich des Behälterdeckels sowie für den Flüssigkeitsausgang aus dem Bereich des Behälterbodens aufweist.

Ein solcher Behälter ist durch die WO-A-96/07462 bekanntgeworden. Er wird dazu eingesetzt, um eine Flüssigkeit, z. B. Wasser, im Durchlauf durch die Granulatfüllung des Behälters chemisch und/oder physikalisch zu behandeln, z. B. zu entsalzen. Je nach Flüssigkeit und Granulatfüllung (z. B. Harze) kann es sich bei derartigen Behältem z. B. um Ionentauscher zur Wasseraufbereitung handeln.

Ein aus der PCT-Anmeldung NL 97/00340, die der WO-A-97/48490 entspricht, bekannter Behälter weist im Deckel einen zentralen Hauptanschluß mit einem Stopfenverschluß und darin integriertem Entlüftungsventil sowie Belüftungsventil mit Tauchrohr bis zum Behälterboden auf. Darüber hinaus ist dieser Behälter mit je einem separaten Anschluß im Deckel für den Flüssigkeitseingang und für den Flüssigkeitsausgang ausgestattet. Zur halbwegs funktionsfähigen Flüssigkeitsverteilung oberhalb der Granulatfüllung ist ein winkelförmiges Rohrstück, mit feinen Bohrung versehen und am Ende verschlossen, in dem einen Anschluß über Dichtungen und Schraubnippel eingebaut. In gleicher Weise ist ein winkelförmiges Rohrstück für den Flüssigkeitsausgang eingesetzt, dessen horizontales, mit feinen Bohrungen versehenes Rohrteil in Nähe des Behälterbodens angeordnet ist.

Dieser bekannte Behälter weist eine Reihe von Nachteilen auf. Zunächst sind die Eingangs- und Ausgangsrohrstücke sehr teuer im Material und der Fertigung. Sie müssen aufgrund der geometrischen Form wie der Behälter aus hochwertigem rostfreiem Stahl hergestellt werden. Außerdem ist die Ausnutzung des Granulates unzureichend, weil sich insbesondere durch die radial zentrale Anordnung des horizontalen Rohrstücks des Entnahmerohres schlecht oder gar nicht durchströmte Bereiche in Bodennähe im Granulat ergeben.

Stark verteuerend wirken sich die zusätzlichen Anschlüsse für Eingang und Ausgang im Behälterdeckel mit Dichtungen und Doppelnippel aus. Standardmäßige Behälter für die chemische Industrie mit nur einem zentralen Anschluß sind nicht verwendbar. Das im Stopfenverschluß unterhalb des Belüftungsventils eingeschraubte zentrale Tauchrohr trägt am unteren Ausgang ein Filterstück zum Luftaustritt, über das nach Teilausnutzung des Granulats dieses über Druckluftstöße aufgelockert werden soll, um die Granulatausnutzung zu verbessern. Dies gelingt aufgrund der strömungstechnischen Gestaltung des Filterstutzens nur unzureichend.

Der Erfindung liegt daher die Aufgabe zugrunde, einen Behälter der eingangs beschriebenen Art zu schaffen, der diese Nachteile nicht besitzt, außerdem noch Vorteile in der Anschlußtechnik aufweist und in einfacher Weise gleichzeitig eine Belüftung erlaubt.

Diese Aufgabe wird nach der Erfindung durch die im kennzeichnenden Teil des unabhängigen Anspruchs angegebene Mermalskombination gelöst.

Diese technische Lösung ist sehr kostengünstig, weil die Zentraleinheit in ihrem außen zugänglichen Teil oberhalb der Abdichtstelle zum Behälter alle funktionalen Anschlüsse für den Betrieb des Behälters und unterhalb der Abdichtstelle in der behälterseitigen rohrförmigen Verlängerung, die sich bis zum Behälterboden erstreckt, alle Vorrichtungen für Leitung, Ein- und Austritt sowie Filterung bzw. Rückhalten von Granulat bzw. Granulatbruch aufweist.

Die Zentraleinheit läßt sich nach dem Befüllen mit Granulat komplett in den Behälter einsetzen, indem die rohrförmige Verlängerung in das Granulat eingesenkt wird, bis ihre Abdichtstelle am Behälteranschluß fest positioniert ist. In umgekehrter Weise wird die zentrale Einheit aus dem befüllten Behälter entfernt. Das hat den Vorteil, daß sowohl für das Befüllen wie das Entleeren des Behälters mit Granulat keine Einbauten stören, wie bei dem bekannten Behälter.

Die Zentraleinheit ist zudem baukastenartig aufgebaut, um möglichst wenige Teile bzw. zum Teil baugleiche Teile verwenden und unterschiedliche Behälterhöhen durch Austausch nur eines Rohrteils erzeugen zu können. Die jeweiligen Medienein- bzw. -austritte innerhalb des Behälters sind über Feinfiltergewebe abgedeckt und strömungstechnisch optimiert. Das bedeutet z. B., daß der Flüssigkeitseintritt im Bereich des Behältersdeckels in den Flüssigkeitsraum oberhalb der Granulatfüllung turbulenzfrei über gleichmäßig radial angeordnete Düsen erfolgt, um Aufwirbelungen und Kanalbildung im Granulat zu vermeiden und eine gleichmäßige Durchströmung des Granulats zu ermöglichen. Diese wird noch durch einen horizontal anzuströmenden ringförmigen Aufnahmekanal am Fußende der Zentraleinheit mit einem Durchmesser bis nahe dem lichten Durchmesser des Behälteranschlusses unterstützt.

Der Entlüftungseintritt erfolgt dicht unter dem Behälteranschluß in die Zentraleinheit, um ein max. Flüssigkeitsvolumen sicherzustellen. Die Belüftungsfunktion und damit die Granulatauflockerung wird durch die besondere Gestaltung des Luftaustritts am Fußende der Zentraleinheit wesentlich verbessert, indem der Luftaustritt durch feine radial angeordnete Düsen auf einem Durchmesser bis nahe dem lichten Durchmesser des Behälteranschlusses erfolgt.

Durch diese Maßnahme wird der gesamte Granulatinhalt durch verfahrenstechnisch optimierte Luftstöße aufgelockert. Es werden frische Granulatflächen frei, wodurch die Nutzungskapazität vergrößert wird.

Die jeweiligen Ein- bzw. Austrittsöffnungen im Anschlussteil und im Sammel-/Verteilerstück sind vorteilhaft über Feinfiltermaterial abgedeckt.

Die Erfindung wird nachstehend anhand eines in den Fig.1 - Fig. 4 dargestellten Ausführungsbeispiels näher beschrieben. Es zeigen:
- Fig. 1: einen Behälter im Vertikalschnitt, mit eingesetzter Zentraleinheit;
- Fig. 2: einen Teilschnitt eines Behälters im Bereich des Behälterdeckels;
- Fig. 3: eine Ausführungsform einer Zentraleinheit; und
- Fig. 4: eine Ausführungsform eines Anschlussteils einer Zentraleinheit, in perspektivischer Aufsicht.

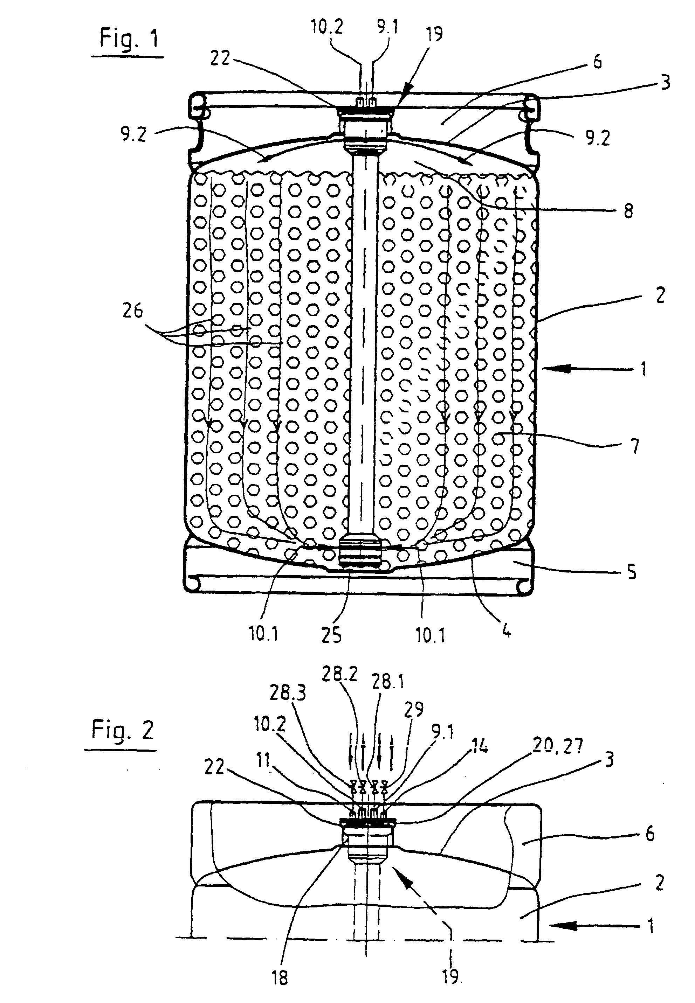

Der Behälter 1 (Fig. 1) besteht aus einem zylindrischen Mantel 2, dem Behälterdeckel 3 und dem Behälterboden 4. Derartige Behälter werden in der Regel unter Druck betrieben, darum sind Deckel 3 und Boden 4 als gewölbte Endböden ausgebildet. Über einen Standring 5 kann der Behälter auf dem Boden abgestellt oder dem Kopfring 6 eines weiteren Behälters 1 gestapelt werden. In Behälterdeckel 3 ist ein zentraler Behälteranschluss 18 angeordnet, der eine Zentraleinheit 19 aufnimmt. Weiter ist der Behälter 1 mit Granulat 7 befüllt, das lediglich einen kleinen Restraum im Behälterdeckel 3 frei lässt, in dem sich ein Restvolumen einer Flüssigkeit 8 befindet, die darüber hinaus auch die Hohlräume im Granulat 7 ausfüllt.

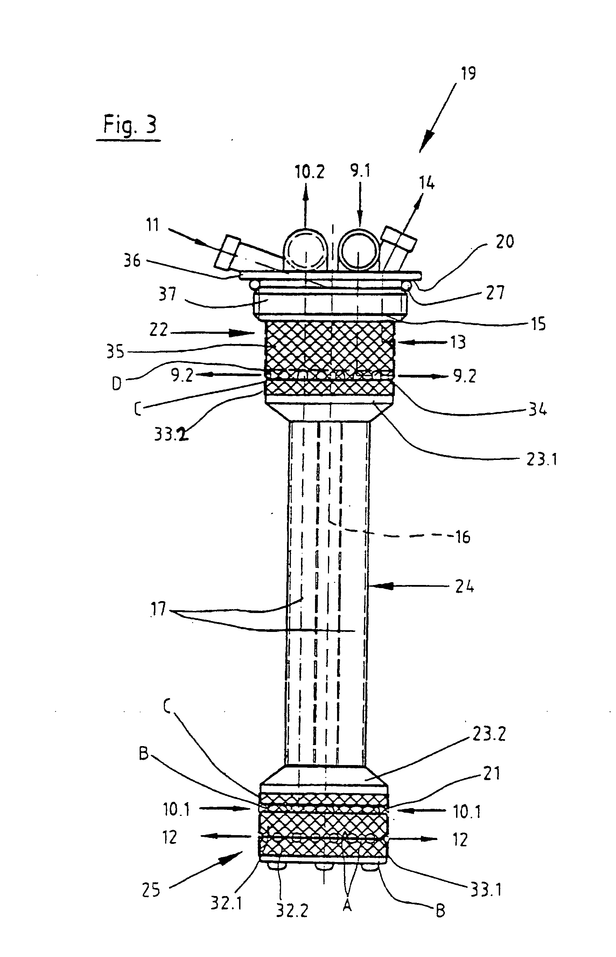

In Fig. 1 ist lediglich schematisch der Hauptmedienstrom dargestellt, nämlich der Flüssigkeitseingang 9.1 in die Zentraleinheit und der Flüssigkeitsausgang 9.2 in das Restvolumen der Flüssigkeit 8 im Deckelbereich, die Durchströmung 26 des Granulats 7 sowie der Flüssigkeitsausgang 10 mit der Zuströmung 10.1 in ein Sammel-/Verteilerstück 25 der Zentraleinheit 19 und der Austritt 10.2 aus dem Anschlussteil 22 der Zentraleinheit 19. Ebenfalls vorhandene Entlüftungsein- und -austritte 13, 14 mit Belüftungsanschluss 11 sowie ein weiterer Belüftungsaustritt 12 sind in Fig. 1 nicht dargestellt (vgl. Fig. 3).

Während Fig. 1 einen kompletten Behälter aus Metall darstellt, zeigt die Fig. 2 auszugsweise einen Behälter 1 mit Mantel 2, Behälterdeckel 3 und Kopfring 6 im Teilschnitt. Der Behälter 1 kann aber auch ganz oder teilweise aus Kunststoff gefertigt sein.

In dem Deckel 3 ist ein Behälteranschluss 18 eingeschweißt, z.B. eine Gewindemuffe, in den die Zentraleinheit 19, z.B. über eine Dichtung 27 eingedichtet, eingesetzt ist.

Von der Zentraleinheit 19 ist nur der außerhalb der Abdichtstelle 20 befindliche Teil des Anschlussteils 22 sichtbar, aus dem die Anschlüsse für Flüssigkeitseingang 9.1, Flüssigkeitsausgang 10.2, Belüftungsanschluss 11 und Entlüftungsaustritt 14 herausragen. Zur vollen Betriebsfähigkeit des Behälters 1 sind die Anschlüsse 9.1, 10.2 und 11 mit Anschlusselementen 28 für die anzuschließenden Schlauchleitungen sowie der Entlüftungsaustritt 14 mit einem Entlüftungsventil 29 ausgestattet.

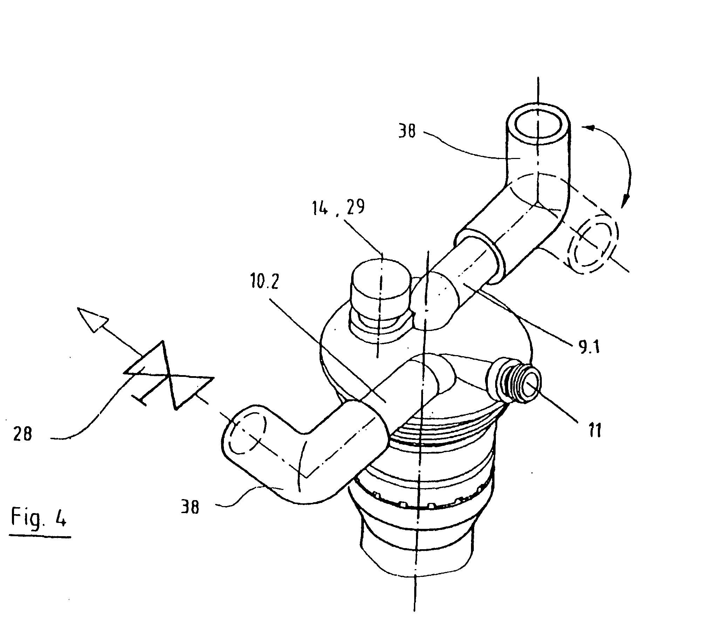

Die Fig. 3 zeigt eine bevorzugte Ausführungsform einer Zentraleinheit 19, die aus dem Anschlussteil 22, zwei Übergangsstücken 23.1, 23.2, dem Rohrteil 24 und dem Sammel-/Verteilerstück 25 zu einer stabilen Einheit zusammengefügt ist. Es hat sich als vorteilhaft erwiesen, dass die Anschlüsse 9.1, 10.2, 11 nicht wie in Fig. 2 dargestellt auf dem Anschlussteil 22 axial, sondern in einem Winkel zur Behälterachse angeordnet sind, damit die Anschlüsse bzw. die Anschlusselemente 28 innerhalb der Kontur des Kopfrings 6 geschützt und sicher unterzubringen sind. Dies wird mit der Zentraleinheit 19 nach Fig. 3 und dem Anschlussteil 22 nach Fig. 4 realisiert. Das Anschlussteil 22, die Übergangsstücke 23 und das Sammel-/Verteilerstück 25 sind Kunststoffteile, das Rohrteil 24 besteht aus einem Aussenrohr 30 und einem Innenrohr 31 aus Kunststoff.

Das Sammel-/Verteilerstück 25 ist aus zwei identischen Halbstücken 32.1, 32.2 zusammengesetzt, deren spiegelbildlich einander zugeordnete erste Seiten A die Düsen des Belüftungsaustritts 12 bilden und mit dem Belüftungskanal 16 verbunden sind. Der Zugang der Seite B am unteren Halbstück 32.2 zum Belüftungskanal 16 ist verschlossen. Die Seite B zum oberen Halbstück 32.1 bildet mit der Seite C des Übergangsstücks 23.2 den Aufnahmekanal 21 für den Flüssigkeitsausgang 10.1. Der Aufnahmekanal 21 ist mit dem Ausgangskanal 17 über das Übergangsstück 23.2 strömungstechnisch und druckdicht verbunden.

Das Sammel-/Verteilerstück 25 und teilweise das Übergangsstück 23.2 sind im Bereich des Belüftungsaustritts 16 und des Sammelkanals 21 durch ein rohrförmiges Filtergewebe 33.1 gegen Eindringen von Granulat bzw. Granulatbruch abgedeckt.

Die Ausbildung der rohrseitigen Kontaktfläche der Übergangsstücke 23.1, 23.2 regelt den Übergang der Kanäle 16 und 17 aus dem Rohrteil 24 in die Übergangsstücke 23.1, 23.2, die gegenseitige drucktechnische Abdichtung der Strömungswege und die mechanische Verbindung.

Die Seite C der Halbstücke 23.1, 23.2 erzeugt einmal mit der Seite B den Aufnahmekanal 21. zum anderen aber auch mit der Seite D des Anschlussteils 22 den Austrittskanal 34 für den Flüssigkeitseingang 9.2, die gegenseitige drucktechnische Abdichtung der Strömungswege und die mechanische Verbindung der Teile.

Das Anschlussteil 22 besteht im wesentlichen aus drei konzentrischen Rohrstücken 35, die über den Deckel 36 miteinander einteilig verbunden sind. Unterhalb des Dekkels 36 weist das äußere Rohrstück 35 ein Befestigungsgewinde 37 auf, zwischen Gewinde 37 und Deckel 36 befindet sich die Abdichtstelle 20 bzw. die Dichtung 27.

Auf dem Deckel 36 sind die Anschlüsse 9.1, 10.2, 11 und 14 angeordnet. Sie sind in ihrer Achslage so positioniert, dass die zu montierenden zum Teil nicht dargestellten Anschlusselemente 28 und das Entlüftungsventil innerhalb der Kontur des Kopfrings 6 unterzubringen sind. Es hat sich als besonders zweckmäßig gezeigt, den Flüssigkeitseingang 9.1 und den Flüssigkeitsausgang 10.2 als unter ca. 90° zur Behälterachse abgewinkelte Rohrstutzen dicht oberhalb des Deckels 36 auszubilden. Dadurch wird der Einsatz handelsüblicher Rohranschlusselemente 38 mit 0-Ringabdichtung möglich, die eine Schwenkbewegung der Anschlusselemente 28 aus der Kontur des Kopfrings 6 heraus, z.B. zum Anschließen von Schlauchleitungen, ermöglicht (vgl. Fig. 4). Die Achswinkel für den nicht schwenkbaren Belüftungsanschluss 11 und den Entlüftungsaustritt 14 sind zwischen 0 und 60° so gewählt, dass die Anschlusselemente 28 innerhalb der Kontur des Kopfrings 6 verbleiben.

Die drei konzentrischen Rohrstücke 35 des Anschlussteils 22 erzeugen zwei kreisringförmige Strömungskanäle und einen zentralen Rohrkanal. Der zentrale Rohrkanal ist einerseits mit dem Belüftungsanschluss 11 und andererseits mit dem Belüftungskanal 16 verbunden.

Der äußere kreisringförmige Strömungskanal ist mit dem Flüssigkeitseingang 9.1 und dem Austrittskanal 34 für den Flüssigkeitseingang 9.2 verbunden. Der innere kreisringförmige Strömungskanal ist mit dem Flüssigkeitsausgang 10.2 im Deckel 36 und über das Übergangsstück 23.1mit dem Ausgangskanal 17 verbunden. Der Entlüftungsaustritt 14 ist über einen im Bereich zwischen dem äußeren und dem mittleren Rohrstück 35 angeordneten separaten Entlüftungskanal 15 mit dem Entlüftungseintritt 13 verbunden.

Das Anschlussteil 22 und das Übergangsstück 23.1 sind teilweise im Bereich des Austrittskanals 34 und des Entlüftungseintritts 13 durch ein rohrförmiges Filtergewebe 33.2 gegen Eindringen von Granulat bzw. Granulatbruch abgedeckt.

## Patentansprüche

1. Behälter (1), umfassend einen zylindrischen Mantel (2), einen Behälterdeckel (3) und einen Behälterboden (4) sowie einen Stand- und Kopfring (5, 6), mit einer Granulatfüllung zur chemischen und/oder physikalischen Behandlung von Flüssigkeiten (8) im Durchfluß innerhalb des Behälters mit mindestens je einem Anschluß für Flüssigkeitseingang und -ausgang, wobei die Anschlüsse für mindestens Flüssigkeitseingang (9) und Flüssigkeitsausgang (10) in einem Anschlußteil (22) einer außerdem ein von dem Anschlußteil (22) bis zum Behälterboden (4) reichendes Rohr (24) mit unten ein Sammel-/Verteilerstück (25) aufweisenden Zentraleinheit (19) angeordnet sind, die in einem Behälteranschluß (18) im Behälterdeckel (3) druckdicht montiert ist und die jeweiligen funktionalen Strömungswege für den Flüssigkeitseingang (9.1, 9.2) in den Bereich des Behälterdeckels (3) sowie für den Flüssigkeitsausgang (10.1, 10.2) aus dem Bereich des Behälterbodens (4) aufweist,
**dadurch gekennzeichnet,**
**daß** das Anschlußteil (22) mit einem Belüftungsanschluß (11) und einem Entlüftungsaustritt (14) ausgebildet ist, denen Strömungswege für die Belüftung in den Bereich des Behältersbodens (4) und für die Entlüftung aus dem Bereich des Behältersdeckels (3) zugeordnet sind, das Sammel-Nerteilerstück (25) aus zwei identischen Halbstücken (32.1/32.2) besteht, deren Seiten (A) einen Belüftungsaustritt (12) am Fußende der Zentraleinheit (19) bilden, und jeweils zwischen dem Rohr (24) und dem Anschlußteil (22) bzw. dem Sammel-/Verteilerstück (25) angeordnete Übergangsstücke (23.1/23.2) identisch ausgebildet sind, wobei deren Kopfseiten (C) mit der Kopfseite (B) des Halbstückes (32.1) des Sammel-Verteilerstücks (25) einen Aufnahmekanal (21) und mit einer Kopfseite (D) des Anschlußteiles (22) einen Austrittskanal (34) bilden.

2. Behälter nach Anspruch 1,
**dadurch gekennzeichnet,**
**daß** das Anschlußteil (22) aus mindestens drei konzentrisch angeordneten Rohrstücken (35) und einem Deckel (36) besteht, auf dem mindestens die Anschlüsse für Flüssigkeitseingang (9.1), Flüssigkeitsausgang (10.2), Belüftung (11) und Entlüftungsaustritt (14) angeordnet sind, wobei der Belüftungsanschluß (11) mit einem zentralen Rohrstück (35.1) und dem Belüftungskanal (16), der Flüssigkeitseingang (9.1) mit dem äußeren kreisringförmigen Kanal und darüber hinaus mit dem Austrittskanal (34), der innere kreisringförmige Kanal mit dem Flüssigkeitsausgang (10.2) und über das Übergangsstück (23.1) mit dem Ausgangskanal (17) verbunden sind und der Entlüftungsaustritt (14) über einen im Bereich zwischen dem äußeren und dem mittleren Rohrstück (35) angeordneten, separaten Entlüftungskanal (15) mit dem Entlüftungseintritt (13) verbunden ist.

3. Behälter nach Anspruch 2,
**dadurch gekennzeichnet,**
**daß** die Anschlüsse für den Flüssigkeitseingang (9.1) und den Flüssigkeitsausgang (10.2) als unter ca. 90° abgewinkelte Rohrstutzen dicht oberhalb des Dekkels (36) zum Anschluß von schwenkbaren Rohranschlußelementen (37) mit O-Ring-Abdichtung ausgebildet sind.

4. Behälter nach einem der Ansprüche 1 bis 3,
**dadurch gekennzeichnet,**
**daß** das Anschlußteil (22) und das Übergangsstück (23.1) teilweise im Bereich des Austrittskanals (34) und des Entlüftungseintritts (13) sowie das Sammel-/Verteilerstück (25) und teilweise das Übergangsstück (23.2) im Bereich des Belüftungsaustritts (16) und des Sammelkanals (21) durch rohrförmige Filtergewebe abgedeckt sind.

## Claims

1. A container (1), comprising a cylindrical jacket (2), a container lid (3) and a container base (4) as well as a mounting ring and head ring (5, 6), with a granular filling for the chemical and/or physical treatment of fluids (8) flowing through the interior of the container with at least one connection for fluid inlet and outlet, ventilation and bleeding of air, whereby the connections for at least fluid inlet (9) and fluid outlet (10) are arranged in the connecting part (22) of a central unit (19), which is mounted in a pressure-tight manner in a container connection (18) of the container lid (3), and having also a pipe (24) extending from the connection part (22) to the container floor (4) with a collection/distribution piece (25) below, and comprises the respective functional flow paths for the fluid inlet (9.1, 9.2) into the region of the container lid (3), and for the outlet of fluid (10.1, 10.2) from the region of the container floor (4), **characterised in that** the connecting part (22) is configured with a ventilation connection (11) and an air bleed outlet (14), which are assigned flow paths for the ventilation into the region of the container floor (4) and for air bleed from the region of the container lid (3), the collection/distribution piece (25) comprises two identical half pieces (32.1, 32.2), whereof the sides (A) form a ventilation outlet (12) on the foot of the central unit (19), and in each case transition pieces (23.1, 23.2) are designed identically between the pipe (24) and the connecting part (22) or the collection/distribution piece (25), whereby their top sides (C) form an uptake channel (21) with a top side (B) of the half piece (32) and form the outlet channel (34) with a top side (D) of the connecting part (22).

2. The container as claimed in Claim 1, **characterised in that** the connecting part (22) comprises at least three concentrically arranged pipe sections (35) and a cover (36), on which at least the connections for fluid inlet (9.1), fluid outlet (10.2), ventilation (11) and bleeding of air outlet (14) are arranged, whereby the ventilation connection (11) is connected to a central pipe piece (35.1) and the ventilation channel (16), the fluid inlet (9.1) is connected to the outer circular channel and in addition to the outlet channel (34), the inner circular channel is connected to the fluid outlet (10.2) and via the transition piece (23.1) to the outlet channel (17), and the bleeding of air outlet (14) is connected to the bleeding of air inlet (13) via a separate bleeding of air channel (15) arranged in the region between the outer and the middle pipe section (35).

3. The container as claimed in Claim 2, **characterised in that** the connections for the fluid inlet (9.1) and the fluid outlet (10.2) are designed as pipe connections angled at ca. 90° above the cover (36) for connecting pivoting pipe connection elements (37) with O ring seal.

4. The container as claimed in any one or more of Claims 1 to 3, **characterised in that** the connecting part (22) and the transition piece (23.1) are covered partially in the region of the outlet channel (34) and the bleeding of air inlet (13) and the collection/distribution piece (25) and partially the transition piece (23.2) in the region of the ventilation outlet (16) and of the collection channel (21) by tubular filter mesh.

## Revendications

1. Récipient (1), comprenant une jupe cylindrique (2), un couvercle de récipient (3) et une base de récipient (4) ainsi qu'un anneau de bâti et de sommet (5,6) comportant une charge de granulés pour traiter chimiquement et/ou physiquement des liquides (8) qui s'écoulent au travers de l'intérieur du récipient, pourvus chacun d'un raccord d'entrée et de sortie, dans lequel les raccords d'au moins une entrée de liquide (9) et une sortie de liquide (10) sont disposés dans une partie de raccord (22) d'une unité centrale (19) qui présente en outre un tube (24) s'étendant de la partie de raccord (22) jusqu'à la base du récipient (4) comportant un collecteur/répartiteur (25) inférieur, laquelle unité centrale est montée de manière à résister à la pression dans un raccord de récipient (18) au niveau du couvercle du récipient (3) et présente les chemins d'écoulement fonctionnels respectifs de l'entrée de liquide (9.1,9.2) au niveau du couvercle de récipient (3) ainsi que de la sortie de liquide (10.1,10.2) au niveau de la base du récipient (4),
**caractérisé en ce que**,
la partie de raccord (22) est configurée avec un raccord d'entrée d'air (11) et un raccord de sortie d'air (14) dont les chemins d'écoulement sont coordonnés à l'entrée d'air au niveau de la base de récipient (4) et à la sortie d'air au niveau du couvercle du récipient (3), le collecteur/répartiteur (25) est constitué de deux demi-pièces (32.1/32.2) identiques, dont les côtés (A) forment une sortie d'aération (12) à l'extrémité inférieure de l'unité centrale (19) et sont configurés respectivement de manière identique entre le tube (24) et la partie de raccord (22), respectivement les pièces de transition (23.1/23.2) disposées au niveau du collecteur/répartiteur (25), moyennant quoi leurs côtés de sommet (C) forment avec le côté de sommet (B) de la demi-pièce (32.1) du collecteur/répartiteur (25) un canal d'admission (21) et avec un côté de sommet (D) de la partie de raccord (22) un canal d'échappement.

2. Récipient selon la revendication 1,
**caractérisé en ce que**,
la partie de raccord (22) est constituée d'au moins trois embouts de tube (35) disposés concentriquement et d'un couvercle (36), sur lequel au moins les raccords de l'entrée de liquide (9.1), la sortie de liquide (10.2), l'entrée d'air (11) et la sortie d'air (14) sont disposés, moyennant quoi le raccord d'entrée d'air (11) est relié avec un corps de tube (35.1) central et le canal d'entrée d'air (16), l'entrée de liquide (9.1) est reliée avec le canal extérieur en forme de couronne et, à partir de ce dernier, au canal de sortie (34), le canal intérieur en forme de couronne est relié à la sortie de liquide (10.2) et, par la pièce de transition (23.1), au canal de sortie (17) et la sortie d'air (14) est reliée à l'entrée d'air (13) par un canal d'échappement (15) séparé, disposé dans la zone entre le corps de tuyau (35) extérieur et le corps de tuyau médian.

3. Récipient selon la revendication 2,
**caractérisé en ce que**,
les raccords de l'entrée de liquide (9.1) et de la sortie de liquide (10.2) sont configurés comme des embouts de tube qui se détournent d'environ 90° de manière étanche au dessus du couvercle (36) afin de raccorder les éléments de raccord de tube (37) pivotants avec le joint torique d'étanchéité.

4. Récipient selon une des revendications 1 à 3,
**caractérisé en ce que**,
la partie de raccord (22) et la pièce de transition (23.1) partiellement au niveau du canal de sortie (34) et de l'entrée d'air (13) ainsi que le collecteur/répartiteur (25) et une partie de la pièce de transition (23.2) au niveau de la sortie d'aération (16) et du canal collecteur (21) sont recouverts par des tissus de filtrage en forme de tubes.
